# EUROPEAN PATENT APPLICATION

(11) **EP 4 664 865 A1**
(43) Date of publication of application: **17.12.2025**
(21) Application number: 24847594.9
(22) Date of filing: 21.03.2024
(51) Int. Cl.: H04M 1/02

(54) **ELECTRONIC DEVICE**

(30) Priority: 31.07.2023 CN 202310962422
(71) Applicant: Honor Device Co., Ltd., Shenzhen, Guangdong 518040 (CN)
(72) Inventor: SONG, Shaohua, Shenzhen, Guangdong 518040 (CN); XU, Chuan, Shenzhen, Guangdong 518040 (CN); ZHANG, Peng, Shenzhen, Guangdong 518040 (CN); ZHANG, Hongming, Shenzhen, Guangdong 518040 (CN)
(74) Representative: Isarpatent
(86) International application number: PCT/CN2024/083133
(87) International publication number: WO 2025/025628

(57) **Abstract**

This application provides an electronic device, and relates to the field of electronic device technologies, to resolve a problem of how to improve bonding reliability between a display screen and a middle frame. The middle frame of the electronic device has an accommodating groove, and the accommodating groove includes a groove bottom wall. At least a part of the display screen is located in the accommodating groove. On the display screen, a fixed portion is located on a back side of a first main body portion, and a bending portion is connected between an edge of the first main body portion and the fixed portion. A first colloid is bonded between the fixed portion and the first main body portion. At least a part of a second colloid is bonded between the groove bottom wall and the fixed portion. An elastic modulus of the second colloid is less than or equal to 5 MPa. Alternatively, shear strength between the second colloid and the fixed portion is less than shear strength between the first colloid and the fixed portion, and is less than shear strength between the first colloid and the first main body portion. Alternatively, shear strength between the second colloid and the groove bottom wall is less than the shear strength between the first colloid and the fixed portion, and is less than the shear strength between the first colloid and the first main body portion.

## Description

This application claims priority to Chinese Patent Application No. 202310962422.6, filed with the China National Intellectual Property Administration on July 31, 2023 and entitled "ELECTRONIC DEVICE", which is incorporated herein by reference in its entirety.

### TECHNICAL FIELD

This application relates to the field of electronic product technologies, and in particular, to an electronic device.

### BACKGROUND

With the development of electronic products, an electronic device like a mobile phone or a tablet computer is usually configured with a display screen, to display an image or a video. The display screen of the electronic device may be fixed to a middle frame through bonding. As an outlet structure of the display screen is bent from an edge of a main body portion configured to display a video or an image to a back side of the main body portion, an appearing structure of the display screen is usually bonded to a middle frame only by using a cover, and bonding strength is weak. Once a bonding structure herein fails, the screen may warp, and external dust, water vapor, and the like may enter the inside of the electronic device, to damage a display panel and other components, causing poor reliability of the entire device and affecting use experience of users.

### SUMMARY

This application provides an electronic device, to solve a problem of how to improve bonding reliability between a display screen and a middle frame.

To achieve the foregoing objective, embodiments of this application use the following technical solutions:
This application provides an electronic device, including: a middle frame, a display screen, a first colloid, and a second colloid. The middle frame has an accommodating groove, and the accommodating groove includes a groove bottom wall. At least a part of the display screen is located in the accommodating groove. The display screen includes a first main body portion, a bending portion, and a fixed portion. The fixed portion is located on a back side of the first main body portion, and the bending portion is connected between an edge of the first main body portion and the fixed portion. The first colloid is bonded between the fixed portion and the first main body portion. At least a part of the second colloid is bonded between the groove bottom wall and the fixed portion. An elastic modulus of the second colloid is less than or equal to 5 MPa. Alternatively, shear strength between the second colloid and the fixed portion is less than shear strength between the first colloid and the fixed portion, and is less than shear strength between the first colloid and the first main body portion. Alternatively, shear strength between the second colloid and the groove bottom wall is less than the shear strength between the first colloid and the fixed portion, and is less than the shear strength between the first colloid and the first main body portion.

In the electronic device provided in this embodiment of this application, the second colloid is bonded between the fixed portion of the display screen and the groove bottom wall of the middle frame, to improve bonding reliability between an end portion (that is, an outlet end of the display screen) where the entire display screen corresponds to the fixed portion and the middle frame.

In addition, by making the elastic modulus of the second colloid less than or equal to 5 MPa, when the electronic device is impacted, the second colloid has good elastic deformation performance, which can absorb impact stress and further perform elastic deformation. In this way, the first colloid can be prevented from being detached from the first main body portion and/or the fixed portion, and consequently, the first main body portion can be prevented from being subject to the stress and affecting a display effect.

By making the shear strength between the second colloid and the fixed portion less than the shear strength between the first colloid and the fixed portion, and less than the shear strength between the first colloid and the first main body portion; or by making the shear strength between the second colloid and the groove bottom wall less than the shear strength between the first colloid and the fixed portion, and less than the shear strength between the first colloid and the first main body portion, when the electronic device is impacted, the second colloid can first be detached from the fixed portion or the middle frame. In this way, the first colloid can be prevented from being detached from the first main body portion and/or the fixed portion under an impact force, and consequently, the first main body portion can be prevented from being subject to the stress and affecting the display effect.

In some possible implementations, the display screen further includes a first chip, and the first chip is arranged on a surface of the fixed portion facing away from the first main body portion. At least a part of the second colloid is located on a side of the first chip facing the bending portion. In this way, the second colloid is bonded to an end portion of the fixed portion facing the bending portion, ensuring reliability that the second colloid bonds and fixes an end of the display screen to the groove bottom wall of the middle frame, and can form sealing protection for the first chip, thereby ensuring reliability of the entire electronic device.

In some possible implementations, a width of the second colloid is greater than or equal to 0.5 mm, and less than or equal to 2.5 mm. In this way, a bonding effect that the second colloid bonds the display screen to the groove bottom wall of the middle frame can be ensured, and space between the fixed portion and the groove bottom wall is not excessively occupied, therefore, arrangement of other electronic components is not affected.

In some possible implementations, the second colloid is silicon gel or ultraviolet-curing glue.

In some possible implementations, the electronic device further includes a display panel and a flexible printed circuit board. The display panel includes a first part and a second part. The first part forms a part of the first main body portion, and the second part forms the bending portion and the fixed portion. The flexible printed circuit board includes a second main body portion and a connecting portion. The second main body portion is connected to an end of the fixed portion away from the bending portion, and the connecting portion is connected to an end of the second main body portion away from the bending portion and extends away from the bending portion. In this way, by making a flexible display panel form the bending portion and the fixed portion, a width of a black edge around the first main body portion can be reduced, helping to increase a screen-to-body ratio of the electronic device, improve a display effect, and further improve use experience of a user.

In some possible implementations, the electronic device further includes a display panel and a flexible printed circuit board. The display panel forms a part of the first main body portion. The flexible printed circuit board includes a second main body portion and a connecting portion. The second main body portion is connected to an edge of the display panel, the second main body portion forms the bending portion and the fixed portion, and the connecting portion is connected to an end of the fixed portion away from the bending portion and extends away from the bending portion. In this way, the flexible printed circuit board forms the bending portion and the fixed portion, so that costs of the electronic device can be reduced.

In some possible implementations, the electronic device further includes a third colloid. The third colloid is bonded between the first main body portion and the groove bottom wall and is located on a side of the second main body portion away from the bending portion, and a distance between the third colloid and the second main body portion is less than or equal to 10 mm. In this way, the third colloid may further improve bonding reliability between the outlet end of the display screen and the middle frame, thereby ensuring reliability of the entire electronic device.

In some possible implementations, a width of the third colloid is greater than or equal to 0.5 mm, and less than or equal to 2.5 mm. In this way, an effect of improving the bonding reliability between the outlet end of the display screen and the middle frame can be achieved by using a small amount of the third colloid, which has low costs and facilitates subsequent disassembling and maintenance. In addition, space between the first main body portion and the groove bottom wall is not excessively occupied, therefore, arrangement of other electronic components is not affected.

In some possible implementations, the display screen includes a display panel and a cover. The cover is stacked and arranged on a display side of the display panel, and the cover and at least a part of the display panel form a part of the first main body portion. The cover includes a first outer side surface, and the first outer side surface is arranged opposite to the bending portion along a thickness direction of the display screen. The accommodating groove includes a first groove side wall. The first groove side wall is connected to the groove bottom wall and faces the bending portion and the first outer side surface. The electronic device further includes a fourth colloid. The fourth colloid is bonded between the first outer side surface and the first groove side wall. In this way, for a black edge of an end that is of the display screen and that faces the first groove side wall, a width of a bonding step surface is reduced, thereby effectively improving a screen-to-body ratio and a display effect of the display screen, and further improving the use experience of the user.

In some possible implementations, the electronic device further includes an ink layer. The ink layer is arranged on the first outer side surface, and the fourth colloid is bonded between the ink layer and the first groove side wall. In this way, the ink layer can have a high bonding force with the fourth colloid, bonding reliability between the first outer side surface and the fourth colloid can be improved, and the reliability of the entire electronic device can be improved.

In some possible implementations, shear strength between the ink layer and the fourth colloid is greater than or equal to 10 MPa. In this way, bonding reliability between the fourth colloid and the ink layer can be ensured, and bonding reliability between the fourth colloid and the cover can be ensured.

In some possible implementations, the first outer side surface is perpendicular to a display surface of the display screen. In this way, a design and processing of the first outer side surface and the first groove side wall are facilitated, and in addition, the fourth colloid is conveniently formed by dispensing glue between the first outer side surface and the first groove side wall.

In some possible implementations, the first outer side surface tilts, in a direction away from the display panel, from an end close to the display panel to an end away from the display panel, and an angle between the first outer side surface and the display surface of the display screen is greater than or equal to 60° and less than or equal to 80°. In this way, an effective bonding area between the first outer side surface and the first groove side wall can be enlarged, thereby further improving bonding reliability between the cover and the middle frame, and improving the reliability of the entire electronic device.

In some possible implementations, an avoidance groove is arranged on the first groove side wall, and at least a part of the bending portion is located in the avoidance groove. In this way, the width of the black edge of the end that is of the display screen and that faces the first groove side wall can be further reduced, to further improve the screen-to-body ratio of the display screen, and widths of black edges around the display screen can be the same, thereby further improving the display effect and the use experience of the user.

In some possible implementations, along a thickness direction of the display screen, a width of the fourth colloid is greater than or equal to 0.6 mm and less than or equal to 1 mm. In this way, a bonding area between the first outer side surface and the first groove side wall can be as large as possible, to ensure bonding reliability between the first outer side surface and the first groove side wall. In addition, an amount of glue that is of the fourth colloid and that overflows the first outer side surface is small, which can reduce costs, and can further prevent the fourth colloid from pressing the bending portion.

In some possible implementations, the cover further includes a second outer side surface, a third outer side surface, and a fourth outer side surface. The first outer side surface, the second outer side surface, the third outer side surface, and the fourth outer side surface are connected head-to-tail in sequence. The accommodating groove further includes a second groove side wall, a third groove side wall, and a fourth groove side wall that are connected to the groove bottom wall, where the first groove side wall, the second groove side wall, the third groove side wall, and the fourth groove side wall are connected head-to-tail in sequence. The electronic device further includes a fifth colloid, including a first colloidal segment, a second colloidal segment, and a third colloidal segment that are connected in sequence. The first colloidal segment is bonded between the second outer side surface and the second groove side wall, the second colloidal segment is bonded between the third outer side surface and the third groove side wall, and the third colloidal segment is bonded between the fourth outer side surface and the fourth groove side wall; and two ends of the fourth colloid are respectively connected to the first colloidal segment and the third colloidal segment. In this way, sealing connections are formed between the fourth colloid and both the first colloidal segment and the third colloidal segment. When the cover and the middle frame are bonded, sealing protection can be formed, to prevent outside water vapor and dust from entering the inside of the electronic device to damage electronic components.

In some possible implementations, a part of the fifth colloid is located on a back side of the cover, and is arranged at an interval from the display panel. In this way, when the fifth colloid is formed by glue dispensing, a part that is of the colloid and that overflows the cover does not contact the display panel, which can prevent static electricity from being transmitted to the display panel through the fifth colloid to cause a display fault, like a green screen, on the display panel.

In some possible implementations, the electronic device further includes a sixth colloid. The sixth colloid is bonded between the first main body portion and the groove bottom wall, and includes a fourth colloidal segment, a fifth colloidal segment, and a sixth colloidal segment that are connected in sequence. An extending direction of the fourth colloidal segment is the same as an extending direction of the first colloidal segment, an extending direction of the fifth colloidal segment is the same as an extending direction of the second colloidal segment, and an extending direction of the sixth colloidal segment is the same as an extending direction of the third colloidal segment; and two ends of the second colloid are respectively connected to the fourth colloidal segment and the sixth colloidal segment. In this way, the second colloid and the sixth colloid can form a complete bonding sealing ring. Therefore, when the bonding reliability between the display screen and the middle frame is improved, outside water vapor and dust can be prevented from entering the inside of the electronic device to damage the electronic components.

In some possible implementations, the electronic device has a sound outlet channel. The second colloidal segment includes a first sub-colloidal segment and a second sub-colloidal segment, where the first sub-colloidal segment and the second sub-colloidal segment are respectively located on two sides of the sound outlet channel. The display panel includes a fifth outer side surface, where the fifth outer side surface faces the third groove side wall. The third outer side surface projects out of the display panel, and a part of the third groove side wall, a part of the third outer side surface, and a part of the fifth outer side surface form a part of a side wall of the sound outlet channel. The part of the fifth outer side surface and cover form an included angle area. The electronic device further includes a seventh colloid, where the seventh colloid is arranged in the included angle area. Along the extending direction of the second colloidal segment, two ends of the seventh colloidal segment are respectively connected to the first sub-colloidal segment and the second sub-colloidal segment. In this way, the fourth colloid, the fifth colloid, and the seventh colloid can form a continuous and complete bonding sealing ring, to prevent outside water vapor or dust from entering the inside of the electronic device to damage the display panel and other electronic components, thereby ensuring the reliability of the entire electronic device.

### BRIEF DESCRIPTION OF DRAWINGS

FIG. 1 is a three-dimensional diagram of an electronic device according to some embodiments of this application;
FIG. 2 is an exploded schematic structural diagram of the electronic device shown in FIG. 1;
FIG. 3 is a front view of the electronic device shown in FIG. 1;
FIG. 4 is a cross-sectional structural diagram of the electronic device shown in FIG. 3 taken along a line A-A;
FIG. 5 is a front structural view of a partial structure of the electronic device shown in FIG. 3;
FIG. 6 is a cross-sectional structural diagram of the electronic device shown in FIG. 3 taken along a line B-B;
FIG. 7 is an enlarged view of C in FIG. 6;
FIG. 8 is a rear structural view of a display screen of the electronic device shown in FIG. 3;
FIG. 9 is an enlarged view of D in FIG. 4;
FIG. 10 is a schematic diagram of a display interface of the electronic device shown in FIG. 6;
FIG. 11 is another cross-sectional structural diagram of the electronic device shown in FIG. 3 taken along a line B-B;
FIG. 12 is an enlarged view of E in FIG. 11;
FIG. 13 is a front view of a partial structure of the electronic device shown in FIG. 11;
FIG. 14 is a schematic diagram of a display interface of the electronic device shown in FIG. 11;
FIG. 15 is still another cross-sectional structural diagram of the electronic device shown in FIG. 3 taken along a line B-B;
FIG. 16 is an enlarged view of F in FIG. 15;
FIG. 17 is an enlarged view of G in FIG. 3; and
FIG. 18 is a cross-sectional structural diagram of a line H-H in FIG. 17.

### REFERENCE NUMERALS

100-electronic device;
10-display screen; 101-first main body portion; 102-bending portion; 103-fixed portion; 11-cover; 111-first outer side surface; 112-second outer side surface; 113-third outer side surface; 114-fourth outer side surface; 12-display panel; 121-first part; 122-second part; 123-fifth outer side surface; 13-backplane; 14-first chip; 15-flexible printed circuit board; 151-second main body portion; 152-connecting portion;
20-enclosure; 21-back cover; 22-middle frame; 221-frame; 221a-first end surface; 221b-second end surface; 221c-inner side surface; 221d-outer side surface; 2211-first frame; 2212-second frame; 2213-third frame; 2214-fourth frame; 222-middle plate; 222c-battery slot; 223-accommodating groove; 2231-groove bottom wall; 2232-first groove side wall; 2232a-step surface; 2232b-avoidance groove; 2233-second groove side wall; 2234-third groove side wall; 2235-fourth groove side wall;
30-first circuit board;
40-second circuit board; 401-USB component; and
50-battery; 51-connecting structure.
60-bonding structure; 61-first colloid; 62-second colloid; 63-third colloid; 64-fourth colloid; 65-fifth colloid; first colloidal segment 651; second colloidal segment 652; 6521-first sub-colloidal segment. 6522-second sub-colloidal segment; third colloidal segment 653; 66-sixth colloid; 661-fourth colloidal segment; 662-fifth colloidal segment; 663-sixth colloidal segment; 67-seventh colloid;
70-sound outlet channel; and
80-loudspeaker.

### DESCRIPTION OF EMBODIMENTS

In the embodiments of this application, it should be noted that, unless otherwise explicitly specified and defined, terms such as "installation" and "connection" should be understood in a broad sense. For example, "connection" may be a detachable connection, or may be an undetachable connection; or the "connection" may be a direct connection, or may be an indirect connection by using an intermediate medium.

In embodiments of this application, it should be understood that, mentioned directional terms, such as "up", "down", "left", "right", "inside", and "outside", refer to the directions in the accompanying drawings. Therefore, the used orientation terms are for the purpose of better and clearer description and understanding of embodiments of this application, but do not indicate or imply that an apparatus or component referred to necessarily have a particular orientation, and be constructed in a particular orientation and operation. Therefore, it cannot be construed as a limitation on embodiments of this application.

In the embodiments of this application, terms "first", "second", "third", "fourth", "fifth", "sixth", and "seventh" are merely for the purpose of description, and cannot be construed as indicating or implying relative significance or implicitly indicating a quantity of indicated technical features. Therefore, features defining "first", "second", "third", "fourth", "fifth", "sixth", and "seventh" may explicitly or implicitly include one or more such features.

In the embodiments of this application, terms "include", "comprise", and any variants thereof are intended to cover a non-exclusive inclusion. Therefore, in the context of a process, method, object, or apparatus that includes a series of elements, the process, method, object, or apparatus not only includes such elements, but also includes other elements not specified expressly, or may include inherent elements of the process, method, object, or apparatus. Unless otherwise specified, elements defined by the sentence "including one" does not exclude that there are still other same elements in the processes, methods, objects, or apparatuses.

The term "and/or" in embodiments of this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

In the embodiments of this application, it should be noted that descriptions of "perpendicular" and "parallel" respectively indicate that approximate perpendicular and approximate parallel are allowed within an error range. The error range may be a range in which deviation angles relative to absolute perpendicular and absolute parallel are less than or equal to 5°, 8°, or 10°, and are not specifically limited herein. In addition, shapes of the components described below as "rectangular", "square", and the like all indicate a general shape. Between two adjacent sides, a rounded corner may be arranged, or no rounded corner may be arranged.

This application provides an electronic device. The electronic device includes, but is not limited to, a tablet personal computer (tablet personal computer), a laptop computer (laptop computer), a personal digital assistant (personal digital assistant, PDA), a personal computer, a notebook computer, an onboard device, a wearable device, and the like. The wearable device includes, but is not limited to, a smart bracelet, a smartwatch, a smart head-mounted display, a smart glass, and the like.

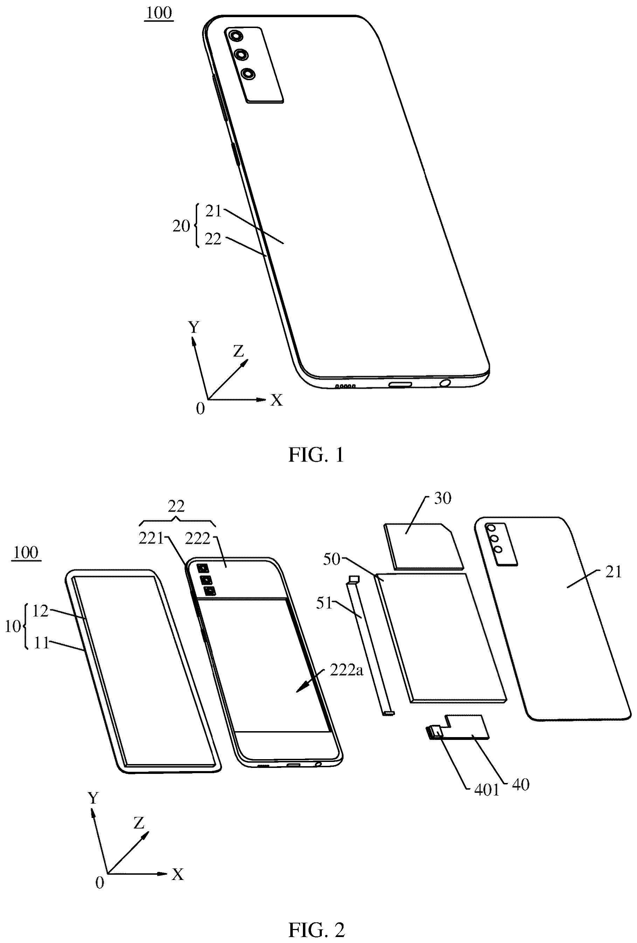

Refer to FIG. 1. FIG. 1 is a three-dimensional view of an electronic device 100 according to some embodiments of this application. In this embodiment and each embodiment in the following, the electronic device 100 being a mobile phone is used for illustrative description. A shape of the electronic device 100 is approximately a rectangular board. On this basis, in order to facilitate the description of the following embodiments, an XYZ coordinate system is established, where a width direction of the electronic device 100 is defined as an X-axis direction, a length direction of the electronic device 100 is defined as a Y-axis direction, and a thickness direction of the electronic device 100 is defined as a Z-axis direction. It may be understood that a coordinate system of the electronic device 100 may be flexibly set according to actual requirements. This is not specifically limited herein. In some other embodiments, the shape of the electronic device 100 may alternatively be a square flat plate, a circular flat plate, an oval flat plate, or the like.

Refer to FIG. 1 and FIG. 2. FIG. 2 is an exploded schematic structural diagram of the electronic device 100 shown in FIG. 1. In the embodiment shown in FIG. 1 and FIG. 2, the electronic device 100 may include a display screen 10, an enclosure 20, a first circuit board 30, a second circuit board 40, and a battery 50. It can be understood that FIG. 1 and FIG. 2 only schematically show some components included in the electronic device 100, and actual shapes, actual sizes, actual positions, and actual structures of these components are not limited by FIG. 1 or FIG. 2.

The display screen 10 is configured to display an image, a video, and the like. The display screen 10 includes a cover 11 and a display panel 12. The cover 11 is a transparent cover, and the cover 11 is stacked and arranged on a display side of the display panel 12. The cover 11 is mainly configured to protect the display panel 12 and prevent dust. A material of the cover 11 includes but is not limited to glass. The display panel 12 is a major component configured to display an image and a video.

The enclosure 20 is configured to protect electronic components inside the electronic device 100. The enclosure 20 may include a back cover 21 and a middle frame 22. The back cover 21 is located on a side of the display panel 12 away from the cover 11, and is stacked on the cover 11 and the display panel 12 and is arranged at an interval.

The middle frame 22 is used as a supporting structure of the electronic device 100. The middle frame 22 includes a frame 221 and a middle plate 222. The frame 221 is relatively fixed to the back cover 21. Specifically, the frame 221 may be fixedly connected to the back cover 21 in a manner such as bonding or clamping. In some other embodiments, the frame 221 may alternatively be integrally formed with the back cover 21, that is, the frame 221 and the back cover 21 are an integral structural part. The cover 11 can be fixed on the frame 221, to enable the cover 11, the back cover 21, and the frame 221 to form an internal accommodating space of the electronic device 100. The middle plate 222 is arranged in the internal accommodating space, and the middle plate 222 is located on the side of the display screen 12 away from the cover 11. An outer edge of the middle plate 222 is connected to an inner side surface of the frame 221, that is, the middle plate 222 is located at an inner side of the frame 221. In some examples, an outer edge of the middle plate 222 is fixed to the inner side surface of the frame 221 by gluing. In some other examples, the middle plate 222 and the frame 221 may alternatively be an integrally formed structure, that is, the middle plate 222 and the frame 221 are an integral structural part.

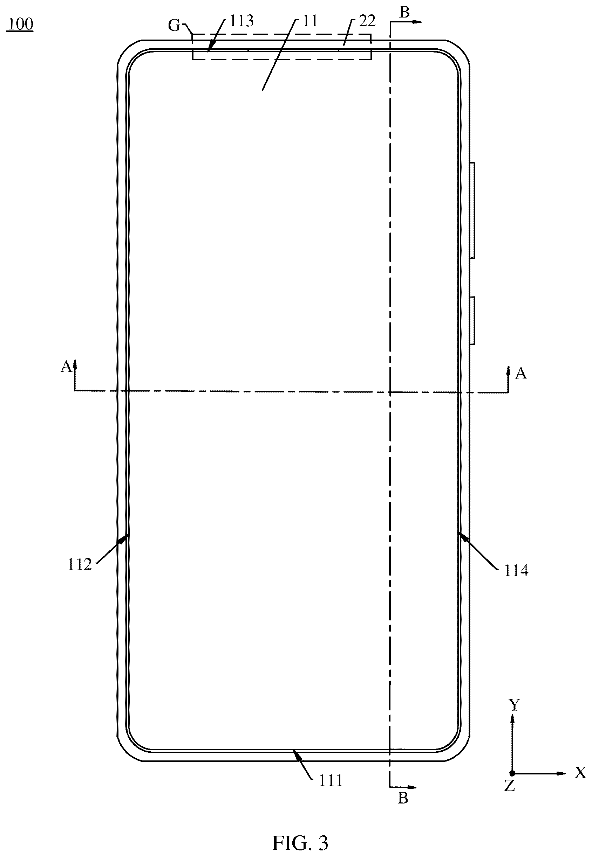

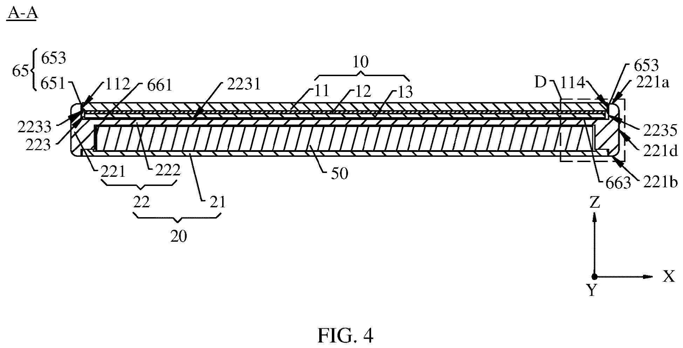

Refer to FIG. 2 to FIG. 4. FIG. 3 is a front view of the electronic device 100 shown in FIG. 1, and FIG. 4 is a cross-sectional structural diagram of the electronic device 100 shown in FIG. 3 taken along line A-A. The middle plate 222 divides the foregoing internal accommodating space into two mutually independent spaces. One space is located between the middle plate 222 and the back cover 21, and the first circuit board 30, the second circuit board 40, and the battery 50 are located in this space. Another space is located between the cover 11 and the middle plate 222, and the display screen 12 is located in this space. In other words, the middle frame 22 has an accommodating groove 223, and the middle plate 222 and the frame 221 surround the accommodating groove 223. A surface of the middle plate 222 facing the display screen 10 forms a groove bottom wall 2231 of the accommodating groove 223, and an inner side surface of the frame 221 that is located on a side of the middle plate 222 facing the display screen 10 forms a groove side wall of the accommodating groove 223. At least a part of the cover 11 and the display panel 12 are located in the accommodating groove 223, that is, at least a part of the display screen 10 is located in the accommodating groove 223. In the embodiment shown in FIG. 2 and FIG. 4, the middle plate 222 has a continuous plate-like structure, to fixedly support the first circuit board 30, the second circuit board 40, the battery 50, the display screen 10, and the like. In some other embodiments, the middle plate 222 may alternatively be a non-continuous plate-like structure. For example, the middle plate 222 may be a frame-like structure, and is fixed to the inner side surface of the frame 221. In this case, the middle plate 222 may also be referred to as an inner frame.

The first circuit board 30 may be a main circuit board of the electronic device 100. The first circuit board 30 is fixed inside the electronic device 100, and is stacked and arranged on the back cover 21 at an interval. In the embodiment shown in FIG. 2, the first circuit board 30 is fixed on the middle plate 222. In some other embodiments, when the middle plate 222 of the electronic device 100 has the frame-like structure, the first circuit board 30 may alternatively be fixed on a surface of the display screen 10 close to the back cover 21.

The first circuit board 30 may be a rigid printed circuit board, a flexible printed circuit board, or a rigid-flex printed circuit board. The first circuit board 30 may be an FR-4 dielectric board, a Rogers (Rogers) dielectric board, an FR-4-and-Rogers mixed dielectric board, or the like. FR-4 herein is a mark of a flame-resistant material grade, and the Rogers dielectric board is a high-frequency board. The first circuit board 30 is configured to set electronic components and realize electrical connection between the electronic components. The electronic components may be a central processing unit (central processing unit, CPU), a graphics processing unit (graphics processing unit, GPU), a universal flash storage (universal flash storage, UFS), a receiver, a camera module, a flash module, and the like.

The second circuit board 40 may be a sub-circuit board of the electronic device 100. The second circuit board 40 is fixed inside the electronic device 100, and is stacked and arranged on the back cover 21 at an interval. The second circuit board 40 and the first circuit board are arranged at an interval along the Y-axis direction. In the embodiment shown in FIG. 2, the second circuit board 40 is fixed on the middle plate 222. In some other embodiments, when the middle plate 222 of the electronic device 100 has the frame-like structure, the second circuit board 40 may alternatively be fixed on the surface of the display screen 10 close to the back cover 21.

The second circuit board 40 may be a rigid printed circuit board, a flexible printed circuit board, or a rigid-flex printed circuit board. The second circuit board 40 may be an FR-4 dielectric board, a Rogers (Rogers) dielectric board, an FR-4-and-Rogers mixed dielectric board, or the like. The second circuit board 40 is configured to integrate a universal serial bus (universal serial bus, USB) component 401. The USB device 401 may be a USB type-C interface device, a USB type-A interface device, a USB type Micro-B interface device, or a USB type-B interface device.

The second circuit board 40 may be electrically connected to the first circuit board 30 through a connecting structure 51, to achieve data and signal transmission between the second circuit board 40 and the first circuit board 30. The connecting structure 51 may be a flexible printed circuit board. In some other embodiments, the connecting structure 51 may alternatively be a conducting wire or an enameled wire.

The battery 50 is fixed inside of the electronic device 100. The battery 50 is located between the first circuit board 30 and the second circuit board 40 along the Y-axis direction. The battery 50 is configured to supply power to the first circuit board 30, the second circuit board 40, the display screen 10, and the like. The battery 50 may be fixed to the middle plate 222. Specifically, a surface of the middle plate 222 facing the back cover 21 is provided with a battery slot 222c, and the battery 50 is installed in the battery slot 222c. In some other embodiments, when the middle plate 222 of the electronic device 100 is frame like, the battery 50 may alternatively be fixed on the surface of the display screen 10 close to the back cover 21.

The battery 50 may include, but is not limited to, a nickel-cadmium battery, a nickel-metal hydride battery, a lithium battery, or another type of battery. A quantity of batteries 50 may be multiple, or may be one. A specific quantity and arrangement of the batteries 50 is not limited in this application.

Structures of the middle frame 22 and the display screen 10, and assembly between the middle frame 22 and the display screen 10 are described in detail in the following.

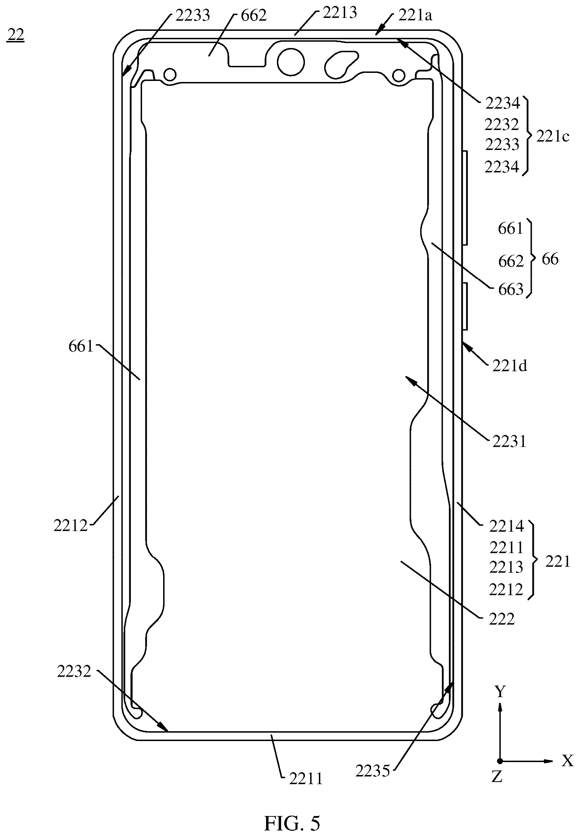

Refer to FIG. 5. FIG. 5 is a front structural view of a partial structure of the electronic device 100 shown in FIG. 3. The middle frame 22 includes the foregoing frame 221 and the foregoing middle plate 222. The frame 221 is approximately in a rectangular box shape. The frame 221 includes a first frame 2211 and a third frame 2213 that are arranged oppositely and at an interval, and a second frame 2212 and a fourth frame 2214 that are arranged oppositely and at an interval. The first frame 2211 and the third frame 2213 are short side segments of the frame 221, and an extending direction of the first frame 2211 and the third frame 2213 is parallel to the X-axis direction. The second frame 2212 and the fourth frame 2214 are long side segments of the frame 221, and an extending direction of the second frame 2212 and the fourth frame 2214 is parallel to the Y-axis direction. The first frame 2211, the second frame 2212, the third frame 2213, and the fourth frame 2214 are connected head-to-tail in sequence to form the frame 221.

Refer to FIG. 4 and FIG. 5. The frame 221 includes a first end surface 221a and a second end surface 221b that face away from each other. The first end surface 221a and the second end surface 221b are arranged along a thickness direction of the middle frame 22, that is, the first end surface 221a and the second end surface 221b are arranged along the Z-axis direction, where the second end surface 221b is located on a back side of the display screen 10. The frame 221 further includes an inner side surface 221c and an outer side surface 221d that face away from each other. The inner side surface 221c is connected between the first end surface 221a and the second end surface 221b. The outer side surface 221d is connected between the first end surface 221a and the second end surface 221b, and forms a part of an outer appearance of the electronic device 100. The first end surface 221a, the second end surface 221b, the inner side surface 221c, and the outer side surface 221d are all annular surfaces surrounding a periphery of the frame 221.

On this basis, a part of the inner side surface 221c located on a side that is of the middle plate 222 and that faces the display screen 10 forms a groove side wall of the accommodating groove 223. Specifically, the accommodating groove 223 includes a first groove side wall 2232, a second groove side wall 2233, a third groove side wall 2234, and a fourth groove side wall 2235. The first groove side wall 2232, the second groove side wall 2233, the third groove side wall 2234, and the fourth groove side wall 2235 are connected head-to-tail in sequence. The first groove side wall 2232 is an inner side surface that is of the first frame 2211 and that is connected to the groove bottom wall 2231, the second groove side wall 2233 is an inner side surface that is of the second frame 2212 and that is connected to the groove bottom wall 2231, the third groove side wall 2234 is an inner side surface that is of the third frame 2213 and that is connected to the groove bottom wall 2231, and the fourth groove side wall 2235 is an inner side surface that is of the fourth frame 2214 and that is connected to the groove bottom wall 2231.

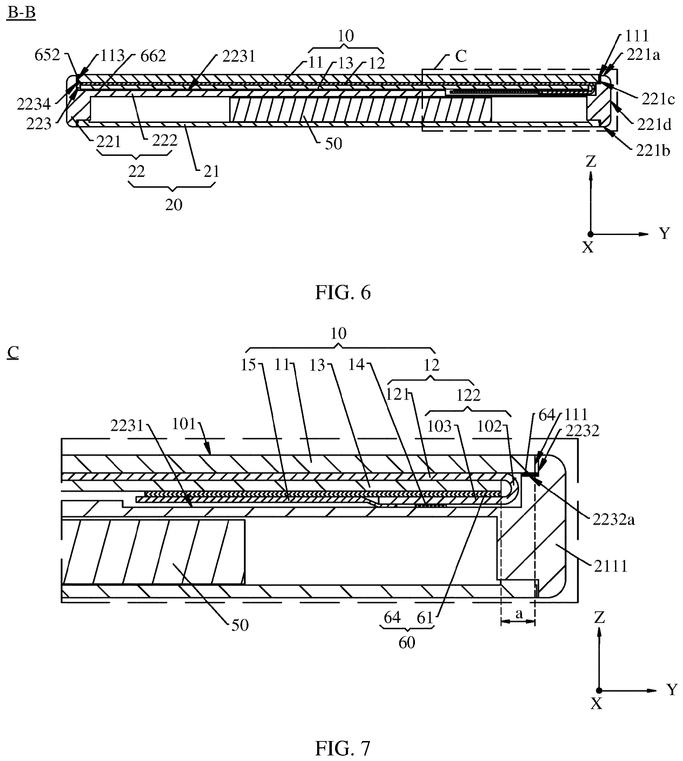

Refer to FIG. 3, FIG. 4, FIG. 6, and FIG. 7. FIG. 6 is a cross-sectional structural diagram of the electronic device 100 shown in FIG. 3 taken along a line B-B, and FIG. 7 is an enlarged view of C in FIG. 6. The display screen 10 includes the foregoing cover 11, the foregoing display panel 12, a backplane 13, a first chip 14, and a flexible printed circuit board 15. It should be noted that FIG. 4 and FIG. 6 schematically show some film layers included in the display screen 10. Sizes and structures of these film layers are not limited to FIG. 4 and FIG. 6. The film layers of the display screen 10 may further include, but are not limited to, a flexible tape layer, a polarizer, a buffer layer, a shield layer, and the like. This is not specifically limited in this application.

The cover 11 is approximately in a rectangular plate shape. A length extending direction of the cover 11 is parallel to the Y-axis direction, and a width extending direction of the cover 11 is parallel to the X-axis direction. The cover 11 includes a first outer side surface 111, a second outer side surface 112, a third outer side surface 113, and a fourth outer side surface 114. The first outer side surface 111, the second outer side surface 112, the third outer side surface 113, and the fourth outer side surface 114 are connected head-to-tail in sequence to form an annular surface around a periphery of the cover 11. The first outer side surface 111 faces the first groove side wall 2232 of the middle frame 22, the second outer side surface 112 faces the second groove side wall 2233 of the middle frame 22, the third outer side surface 113 faces the third groove side wall 2234 of the middle frame 22, and the fourth outer side surface 114 faces the fourth groove side wall 2235 of the middle frame 22.

Refer to FIG. 7. The display panel 12 may be a flexible display panel. For example, the display panel 12 may be an organic light-emitting diode (organic light-emitting diode, OLED) display panel, a micro organic light-emitting diode (micro organic light-emitting diode) display panel, or a quantum dot light emitting diodes (quantum dot light emitting diodes, QLED) display panel.

The display panel 12 includes a first part 121 and a second part 122. The first part 121 is arranged in a stacked manner between the backplane 13 and the cover 11. The backplane 13, the first part 121, and the cover 11 form a first main body portion 101 of the display screen 10, and the first part 121 is configured to display image information. In other words, the cover 11 is arranged in a stacked manner on a display side of the display panel 12, and the cover 11 and at least a part of the display panel 12 form a part of the first main body portion 101. The second part 122 bends from an edge of the first part 121 to a back surface of the backplane 13. A part of the second part 122 forms a bending portion 102, and another part of the second part 122 forms a fixed portion 103. The fixed portion 103 is located on a back side of the first main body portion 101. The bending portion 102 is connected between the first part 121 and the fixed portion 103, that is, the bending portion 102 is connected between an edge of the first main body portion 101 and the fixed portion 103. It should be noted that the back surface of the backplane 13 refers to a surface that is of the backplane 13 and that faces away from the cover 11, and the back side of the backplane 13 refers to a side that is of the backplane 13 and that faces away from the cover 11.

In the embodiment shown in FIG. 7, along a thickness direction (the Z-axis direction) of the display screen 10, the first outer side surface 111 and the bending portion 102 are arranged opposite to each other, and both face the first groove side wall 2232 of the middle frame 22. In some other embodiments, the bending portion 102 may alternatively be arranged opposite to another outer side surface of the cover 11 along the thickness direction of the display screen 10.

In some examples, the backplane 13 may be a metal structural part. For example, a material of the backplane 13 may be copper, copper alloy, steel, titanium, or titanium alloy. In some other examples, the backplane 13 may alternatively be a plastic structural part. For example, a material of the backplane may be polyethylene terephthalate (polyethylene terephthalate, PET), polyimide (polyimide, PI), or a polybutylene terephthalate (polybutylene terephthalate, PBT). The backplane 13 has high stiffness. Therefore, when an external force is applied along a thickness direction of the backplane 13, the backplane 13 is not prone to be dented or deformed. In this way, the backplane 13 can provide excellent support for the display panel 12, to ensure that the first part 121 of the display panel 12 has good flatness, and the first part 121 is not prone to be dented or deformed when an external force is applied thereto.

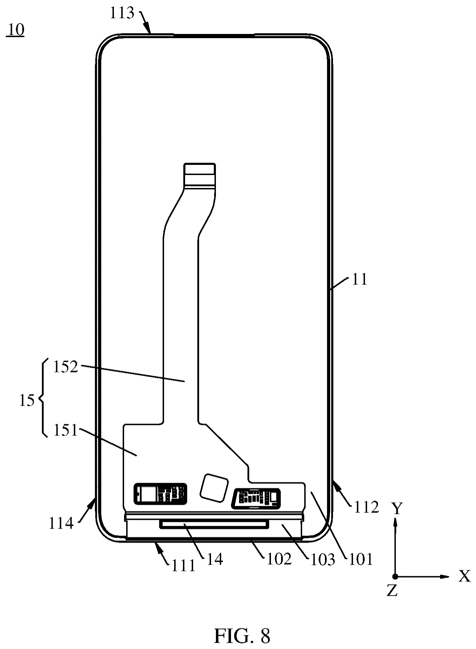

On this basis, refer to FIG. 7 and FIG. 8. FIG. 8 is a rear structural view of the display screen 10 of the electronic device 100 shown in FIG. 3. The first chip 14 is arranged on a surface that is of the fixed portion 103 and that faces away from the first main body portion 101, and is configured to transmit a drive signal to the display screen 10, to make the first main body portion 101 of the display screen 10 display a corresponding image. In this way, when the first main body portion 101 displays an image, an area of a black edge around the first main body portion 101 is reduced, helping increase a screen-to-body ratio of the electronic device 100, improve a display effect, and improve use experience of the user. In some examples, the first chip 14 may be manufactured by wafer slicing, where a wafer refers to a silicon wafer used for manufacturing a silicon semiconductor circuit.

The flexible printed circuit board 15 includes a second main body portion 151 and a connecting portion 152. The second main body portion 151 is connected to an end that is of the fixed portion 103 and that is away from the bending portion 102, and is electrically connected to the first chip 14. In some examples, the second main body portion 151 may be connected to the fixed portion 103 through bonding, and the second main body portion 151 may also be connected to a back surface of the first main body portion 101 through bonding. The connecting portion 152 is connected to an end that is of the second main body portion 151 and that is away from the bending portion 102, and extends away from the bending portion 102. An end that is of the connecting portion 152 and that is away from the second main body portion 151 is electrically connected to the first circuit board 30, to implement electrical signal exchange between the first chip 14 and the main circuit board. In some examples, the connecting portion 152 may be electrically connected to the first circuit board 30 through a BTB connector. In some examples, the flexible printed circuit board 15 may be an integrally formed component, to reduce processing difficulty of the flexible printed circuit board 15.

On the basis of the foregoing descriptions, still refer to FIG. 4, FIG. 5, and FIG. 7. The electronic device 100 further includes a bonding structure 60. The bonding structure 60 includes a first colloid 61, a fourth colloid 64, a fifth colloid 65, and a sixth colloid 66. The first colloid 61 is bonded between the fixed portion 103 and the first main body portion 101. In the embodiment shown in FIG. 7, the second part 122 of the display panel 12 forms the bending portion 103 and the fixed portion 103 of the display screen 10. Based on this, the first colloid 61 is further bonded between the second main body portion 151 of the flexible printed circuit board 15 and the first main body portion 101 of the display screen 10. In some examples, the first colloid 61 may be back adhesive. For example, the first colloid 61 may be foam adhesive. In some other examples, the first colloid 61 may alternatively be hot-melt adhesive.

The fifth colloid 65 includes a first colloidal segment 651, a second colloidal segment 652, and a third colloidal segment 653 that are connected in sequence. The first colloidal segment 651 is bonded between the second outer side surface 112 of the cover 11 and the second groove side wall 2233 of the middle frame 22. The second colloidal segment 652 is bonded between the third outer side surface 113 of the cover 11 and the third groove side wall 2234 of the middle frame 22. The third colloidal segment 653 is bonded between the fourth outer side surface 114 of the cover 11 and the fourth groove side wall 2235 of the middle frame 22. In other words, an extending direction of the first colloidal segment 651 and the third colloidal segment 653 is parallel to the Y-axis direction, and an extending direction of the second colloidal segment 652 is parallel to the X-axis direction. The fifth colloid 65 may be hot-melt adhesive, or may be ultraviolet-curing glue. In this way, the fifth colloid 65 may be bonded and sealed to all of the second outer side surface 112 and the second groove side wall 2233, the third outer side surface 113 and the third groove side wall 2234, the fourth outer side surface 114 and the fourth groove side wall 2335. In addition, when the display screen 10 displays a picture, the black edge of the display screen 10 is small, thereby improving the screen-to-body ratio and the display effect, and improving the user experience of the user.

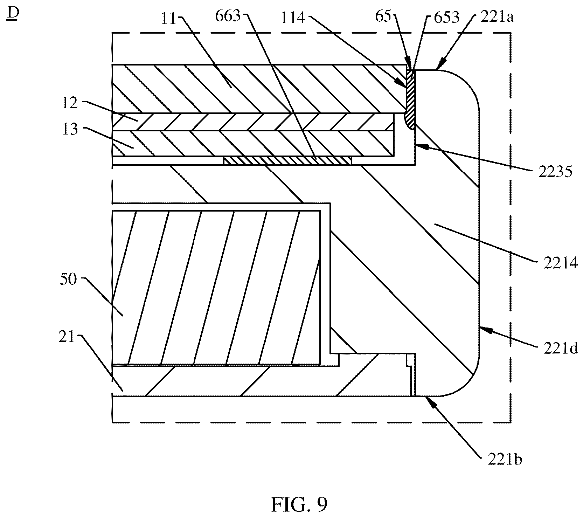

On this basis, refer to FIG. 9. FIG. 9 is an enlarged view of D in FIG. 4. A part of the fifth colloid 65 is located on the back side of the cover 11 and is arranged at an interval from the display panel 12. It should be noted that the back side of the cover 11 refers to a side that is of the cover 11 and that faces the back cover 21. Specifically, a height by which the part that is of the fifth colloid 65 and that is located on the back side of the cover 11 projects beyond the first outer side surface 111 to a side close to the display panel 12 is less than or equal to 0.2 mm. For example, the height by which the part that is of the fifth colloid 65 and that is located on the back side of the cover 11 projects beyond the first outer side surface 111 to the side close to the display panel 12 may be 0 mm, 0.5 mm, 1 mm, 1.5 mm, or 2 mm. In this way, a part that is of the fifth colloid 65 and that overflows the cover 11 does not contact the display panel 12, which can prevent static electricity from being transmitted to the display panel 12 through the fifth colloid 65 to cause a display fault, like a green screen, on the display panel 12.

Still refer to FIG. 4, FIG. 5, and FIG. 6. The sixth colloid 66 is bonded between the first main body portion 101 and the groove bottom wall 2231 of the middle frame 22. In other words, the sixth colloid 66 is bonded between the first main body portion 101 and the middle plate 222. The sixth colloid 66 includes a fourth colloidal segment 661, a fifth colloidal segment 662, and a sixth colloidal segment 663 that are connected in sequence. An extending direction of the fourth colloidal segment 661 is the same as the extending direction of the first colloidal segment 651, and a distance between the fourth colloidal segment 661 and the first colloidal segment 651 is less than or equal to 5 mm. An extending direction of the fifth colloidal segment 662 is the same as the extending direction of the second colloidal segment 652, and a distance between the fifth colloidal segment 662 and the second colloidal segment 652 is less than or equal to 5 mm. An extending direction of the sixth colloidal segment 663 is the same as the extending direction of the third colloidal segment 653, and a distance between the sixth colloidal segment 663 and the third colloidal segment 653 is less than or equal to 5 mm. In this way, the sixth colloid 66 not only can improve bonding reliability between the display screen 10 and the middle frame 22, but also can form sealing between the first main body portion 101 and the middle plate 222, to prevent outside water vapor and dust from entering the inside of the electronic device 100 to damage electronic components.

The sixth colloid 66 may be back adhesive. For example, the sixth colloid 66 may be foam adhesive. In some other embodiments, the sixth colloid 66 may alternatively be hot-melt adhesive.

Based on the foregoing descriptions, refer to FIG. 7. The first groove side wall 2232 of the accommodating groove 223 in the middle frame 22 is in a step shape. The fourth colloid 64 is bonded between a step surface 2232a of the first groove side wall 2232 and the back surface of the cover 11. Specifically, the fourth colloid 64 is bonded to an edge area that is of the back surface of the cover 11 and that is connected to the first outer side surface 111. In some examples, the fourth colloid 64 may be back adhesive. For example, the fourth colloid 64 may be foam adhesive. In some other examples, the fourth colloid 64 may alternatively be hot-melt adhesive. In this way, the fourth colloid 64 implements bonding, fixing, and sealing between the display screen 10 and the middle frame 22.

As an end that is of the display screen 10 and that is corresponding to the first groove side wall 2232 of the middle frame 22 is bonded and fixed to the middle frame 22 only by using the fourth colloid 64, that is, is bonded to the middle frame 22 only by using the cover 11, bonding strength is weak. Once a bonding structure herein fails, the display screen 10 may tilt, and outside dust, water vapor, and the like may enter the inside of the electronic device 100 to damage the display panel 12 and other electronic components arranged on the flexible printed circuit board 15, causing poor reliability of the entire device.

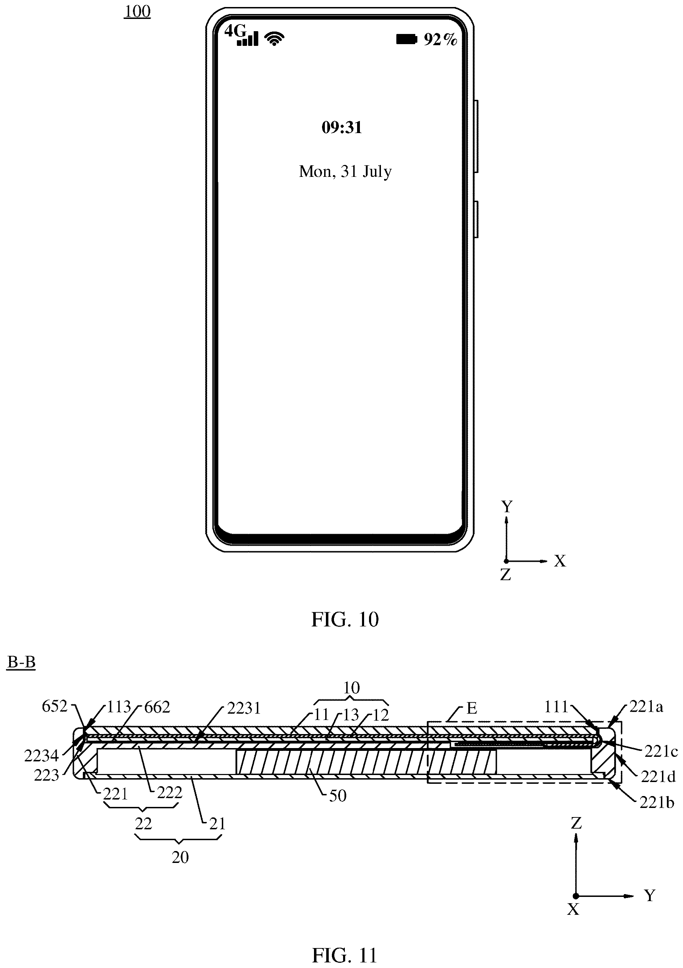

In addition, refer to FIG. 10. FIG. 10 is a schematic diagram of a display interface of the electronic device 100 shown in FIG. 6. To ensure the bonding reliability between the cover 11 and the middle frame 22 as much as possible, a width of the fourth colloid 64 (that is, a width along the Y-axis direction) is usually large, resulting in a large width (a width a in FIG. 7) of the black edge on the end that is of the display screen 10 and that faces the first groove side wall 2232. In a related technology, the width a of the black edge of the display screen 10 can reach 2 mm, and therefore, the screen-to-body ratio of the display screen 10 is small, affecting the display effect of the display screen 10 and the user experience of the user.

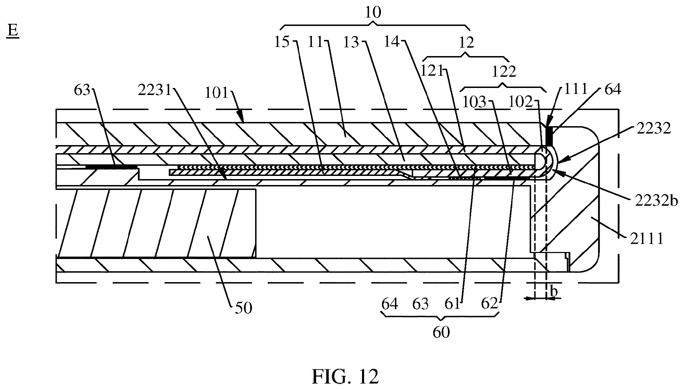

To resolve the foregoing problem, refer to FIG. 11 and FIG. 12. FIG. 11 is another cross-sectional structural diagram of the electronic device 100 shown in FIG. 3 taken along line B-B, and FIG. 12 is an enlarged view of E in FIG. 11. A difference between the embodiment shown in FIG. 11 and FIG. 12 and the embodiment shown in FIG. 6 and FIG. 7 lies in that the bonding structure 60 further includes a second colloid 62 and a third colloid 63. At least a part of the second colloid 62 is bonded between the fixed portion 103 of the display screen 10 and the groove bottom wall 2231 of the middle frame 22.

In some embodiments, an elastic modulus of the second colloid 62 is less than or equal to 5 MPa. A greater elastic modulus indicates greater stiffness of a material. In other words, under a given stress, elastic deformation of the material is smaller. In some examples, the elastic modulus of the second colloid 62 may be 0.5 MPa, 1 MPa, 1.5 MPa, 2 MPa, 2.5 MPa, 3 MPa, 3.5 MPa, 4 MPa, 4.5 MPa, or 5 MPa. In this way, when the electronic device 100 is impacted, the second colloid 62 has good elastic deformation performance, which can absorb impact stress and further perform elastic deformation. In this way, the first colloid 61 can be prevented from being detached from the first main body portion 101 and/or the fixed portion 103, and consequently, the first main body portion 101 can be prevented from being subject to the stress and affecting the display effect.

Based on this, in some examples, the second colloid 62 may be silicon gel. In this way, the second colloid 62 has the following features: good electric insulation performance, a low elastic modulus, not easy to age, high absorption performance, good thermal stability, and a stable chemical property.

In some other examples, the second colloid 62 may alternatively be ultraviolet-curing glue. In this way, the second colloid is safe, environment-friendly, and pollution-free. In addition, curing of the ultraviolet-curing glue is completed under illumination of an ultraviolet lamp. In a process of glue spreading, curing cannot occur without the illumination of the ultraviolet lamp. Therefore, cleaning or adjusting a bonding position is convenient, easy, and fast.

In some other embodiments, shear strength between the second colloid 62 and the fixed portion 103 is less than shear strength between the first colloid 61 and the fixed portion 103, and is less than shear strength between the first colloid 61 and the first main body portion 101. It should be noted that shear strength is a representation manner of bonding strength of the colloid. The shearing strength, which may also be referred to as dynamic shearing strength, lap shearing strength, or the like, refers to a stress required to cause, under an external force in a direction parallel to a bonding surface, damage on an interface of a bonding structure (such as a pressure-sensitive tape, hot-melt adhesive, or an ultraviolet-curing tape layer) and an adherend or a location adjacent to the interface. The shear strength may be measured with reference to GB/T 33332-2016 *Test method for Dynamic Shear Strength of Adhesive Tapes.* In this way, when the electronic device 100 is impacted, the second colloid 62 can first be detached from the fixed portion 103. Thus, the first colloid 61 can be prevented from being detached from the first main body portion 101 and/or the fixed portion 103 under an impact force, and consequently, the first main body portion 101 can be prevented from being subject to the stress and affecting the display effect.

In some other embodiments, shear strength between the second colloid 62 and the groove bottom wall 2231 of the middle frame 22 is less than the shear strength between the first colloid 61 and the fixed portion 103, and is less than the shear strength between the first colloid 61 and the first main body portion 101. In this way, when the electronic device 100 is impacted, the second colloid 62 can first be detached from the groove bottom wall 2231 of the fixed portion 103. Thus, the first colloid 61 can be prevented from being detached from the first main body portion 101 and/or the fixed portion 103 under an impact force, and consequently, the first main body portion 101 can be prevented from being subject to the stress and affecting the display effect.

In some other embodiments, the shear strength between the second colloid 62 and the fixed portion 103 is less than the shear strength between the first colloid 61 and the fixed portion 103, and is less than the shear strength between the first colloid 61 and the first main body portion 101. The shear strength between the second colloid 62 and the groove bottom wall 2231 of the middle frame 22 is less than the shear strength between the first colloid 61 and the fixed portion 103, and is less than the shear strength between the first colloid 61 and the first main body portion 101.

In some embodiments, the second colloid 62 may be back adhesive. For example, the second colloid 62 may be foam adhesive. In some other examples, the second colloid 62 may alternatively be hot-melt adhesive.

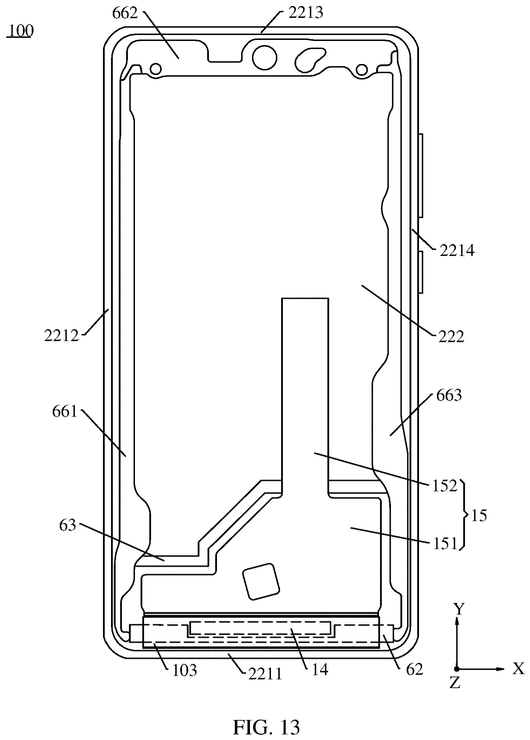

Refer to FIG. 12 and FIG. 13. FIG. 13 is a front view of a partial structure of the electronic device 100 shown in FIG. 11, and FIG. 13 does not include the first main body portion 101 of the display screen 10. At least a part of the second colloid 62 is located on a side of the first chip 14 facing the bending portion 102. In the embodiment shown in FIG. 8, a part of the second colloid 62 is located on a side of the first chip 14 facing the bending portion 102, and other parts of the second colloid 62 are respectively located on a side of the second colloid 62 facing the second groove side wall 2233 and the third groove side wall 2234. In other words, the whole second colloid 62 may be approximately in a rectangular sheet shape, and a first avoidance groove for avoiding the first chip 14 is arranged at an end of the second colloid 62 facing away from the bending portion 102. A side of the second colloid 62 facing the first groove side wall 2232 may be level with a side of the fixed portion 103 facing the first groove side wall 2232, and the side of the second colloid 62 facing the first groove side wall 2232 may alternatively not be level with a side of the fixed portion 103 facing the bending portion 102. In some other embodiments, the second colloid 62 may be approximately in a rectangular sheet shape, and all of the second colloid 62 is located on the side of the first chip 14 facing the bending portion 102.

In this way, the second colloid 62 is bonded to an end portion of the fixed portion 103 facing the bending portion 102, ensuring reliability that the second colloid 62 bonds and fixes an end of the display screen 10 to the groove bottom wall 2231 of the middle frame 22, and can form sealing protection for the first chip 14, thereby ensuring reliability of the entire electronic device 100.

In the embodiment shown in FIG. 13, a part of the second colloid 62 is bonded between the fixed portion 103 and the groove bottom wall 2231 of the middle frame 22. In addition, two ends of the second colloid 62 extend along an extending direction of the first frame 2211, that is, another part of the second colloid 62 is further bonded between the first main body portion 101 and the groove bottom wall 2231. In this way, a bonding area of the second colloid 62 is large, thereby further improving reliability of bonding the display screen 10 to the groove bottom wall 2231 of the middle frame 22. Based on this, two ends of the second colloid 62 are respectively connected to the fourth colloidal segment 661 and the sixth colloidal segment 663. In this way, the second colloid 62 can improve the bonding reliability between the display screen 10 and the middle frame 22, and also form a complete sealing ring with the sixth colloid 66, to prevent outside water vapor and dust from entering the inside of the electronic device 100 and damaging electronic components.

In some other embodiments, along the extending direction of the first frame 2211, end surfaces of the two ends of the second colloid 62 may be respectively level with end surfaces of two ends of the fixed portion 103. In this way, an entire thickness of the second colloid 62 is convenient to be controlled, and a process of bonding the display screen 10 to the middle frame 22 is easy to be implemented.

A width of the second colloid 62 is greater than or equal to 0.5 mm, and less than or equal to 2.5 mm. For example, the width of the second colloid 62 may be 0.5 mm, 1 mm, 1.5 mm, or 2.5 mm. It should be noted that the width of the second colloid 62 is a minimum width of the second colloid 62 along the Y-axis direction. In this way, a bonding effect that the second colloid 62 bonds the display screen 10 to the groove bottom wall 2231 of the middle frame 22 can be ensured, and space between the fixed portion 103 and the groove bottom wall 2231 is not excessively occupied, therefore, arrangement of other electronic components is not affected.

Based on the foregoing descriptions, referring to FIG. 12 and FIG. 13, the third colloid 63 is bonded between the first main body portion 101 and the groove bottom wall 2231 of the middle frame 22. In other words, the third colloid 63 is bonded between the first main body portion 101 and the middle plate 222, and is located on a side of the second main body portion 151 of the flexible printed circuit board 15 facing away from the bending portion 102. A distance between the third colloid 63 and the second main body portion 151 is less than or equal to 10 mm. For example, the distance between the third colloid 63 and the second main body portion 151 may be 0 mm, 1 mm, 2 mm, 3 mm, 4 mm, 5 mm, 6 mm, 7 mm, 8 mm, 9 mm, or 10 mm. It should be noted that the distance between the third colloid 63 and the second main body portion 151 is a maximum width value of a gap between the third colloid 63 and the second main body portion 151. In this way, the third colloid 63 can further enhance bonding reliability between an end of the display screen 10 and the groove bottom wall 2231 of the middle frame 22, thereby ensuring the reliability of the entire electronic device 100.

In the embodiment shown in FIG. 13, the third colloid 63 is in a strip shape with approximately equal widths throughout. An extending path of the third colloid 63 is the same as an extending path of an edge of an end of the second main body portion 151 away from the bending portion 102. A width of the third colloid 63 is greater than or equal to 0.5 mm, and less than or equal to 2.5 mm. For example, the width of the third colloid 63 may be 0.5 mm, 1 mm, 1.5 mm, or 2.5 mm. In this way, an effect of improving the bonding reliability between the display screen 10 and the middle frame 22 can be achieved by using a small amount of the third colloid 63, which has low costs and facilitates subsequent disassembling and maintenance. In addition, space between the first main body portion 101 and the middle plate 222 is not excessively occupied, therefore, arrangement of other electronic components is not affected. In some other embodiments, an extending path of an edge of a side of the third colloid 63 facing the second main body portion 151 may be the same as an extending path of an edge of the second main body portion 151, and an extending path of an edge of a side of the third colloid 63 away from the second main body portion 151 may be parallel to the X-axis direction. In this way, a bonding area of the third colloid 63 is large, thereby further improving the bonding reliability between an end of the display screen 10 and the middle frame 22.

In the embodiment shown in FIG. 13, the third colloid 63 is in a discontinuous strip shape, and two parts of the third colloid 63 are respectively located at two sides of the connecting portion 152. In this way, a position of the connecting portion 152 can be flexibly adjusted to be electrically connected to the first circuit board 30. In some other examples, the third colloid 63 may alternatively be in a continuous strip shape. A part of the third colloid 63 is bonded between the first main body portion 101 and the connecting portion 152 of the flexible printed circuit board 15, or is bonded between the connecting portion 152 and the middle plate 222.

Referring to FIG. 13 again, two ends of the third colloid 63 may be respectively connected to the fourth colloidal segment 661 and the sixth colloidal segment 663 of the sixth colloid 66. A material of the third colloid 63 and a material of the sixth colloid 66 may be the same or different. In this way, the third colloid 63 and the sixth colloid 66 may form a complete sealing ring, or the third colloid 63, the sixth colloid 66, and the second colloid 62 may form another complete sealing ring, to enhance protection of electronic components inside the electronic device 100. In some embodiments, the third colloid 63 may be back adhesive. For example, the third colloid 63 may be foam adhesive. In some other examples, the third colloid 63 may alternatively be hot-melt adhesive.

Based on the foregoing descriptions, referring to FIG. 12 again, the fourth colloid 64 is bonded between the first outer side surface 111 of the cover 11 and the first groove side wall 2232 of the middle frame 22. In some examples, the fourth colloid 64 may be hot-melt adhesive. In some other examples, the fourth colloid 64 may alternatively be ultraviolet-curing glue. In this way, the first outer side surface 111 of the cover 11 and the first groove side wall 2232 of the middle frame are bonded and sealed by using the fourth colloid 64. Compared with a solution in which the back surface of the cover 11 is bonded to the step surface 2232a on the first groove side wall 2232, in the embodiment shown in FIG. 12, for a black edge of an end at which the display screen 10 faces the first groove side wall 2232, a bonding width between the black edge and the step surface 2232a is reduced, thereby effectively improving a screen-to-body ratio and a display effect of the display screen 10, and further improving the use experience of the user.

Along the thickness direction of the display screen 10, a surface of the fourth colloid 64 facing away from the bending portion 102 may be parallel with the first end surface 221a of the frame 221. In this way, an overall appearance of the electronic device 100 is aesthetically good. Based on this, along the thickness direction of the display screen 10, that is, along the Z-axis direction, a width of the fourth colloid 64 is greater than or equal to 0.6 mm and less than or equal to 1 mm. For example, the width of the fourth colloid 64 may be 0.6 mm, 0.7 mm, 0.8 mm, 0.9 mm, or 1.0 mm. In this way, a bonding area between the first outer side surface 111 and the first groove side wall 2232 can be as large as possible, ensuring bonding reliability between the first outer side surface 111 and the first groove side wall 2232. In addition, an amount of glue that the fourth colloid 64 overflows the first outer side surface 111 is small, which can reduce costs, and can further prevent the fourth colloid 64 from pressing the bending portion 102.

Based on the foregoing descriptions, two ends of the fourth colloid 64 may be respectively connected to the first colloidal segment 651 and the third colloidal segment 653 of the fifth colloid 65. In this way, sealing connections are formed between the fourth colloid 64 and the first colloidal segment 651 and the third colloidal segment 653. When the cover 11 and the middle frame 22 are bonded, sealing protection can be formed, to prevent outside water vapor and dust from entering the inside of the electronic device 100 to damage electronic components. Based on this, the fifth colloid 65 and the fourth colloid 64 may be an integrally formed component of a same material. In this way, the fourth colloid 64 and the fifth colloid 65 can be integrally formed by dispensing glue and curing at a time, thereby improving assembly efficiency of the electronic device 100.

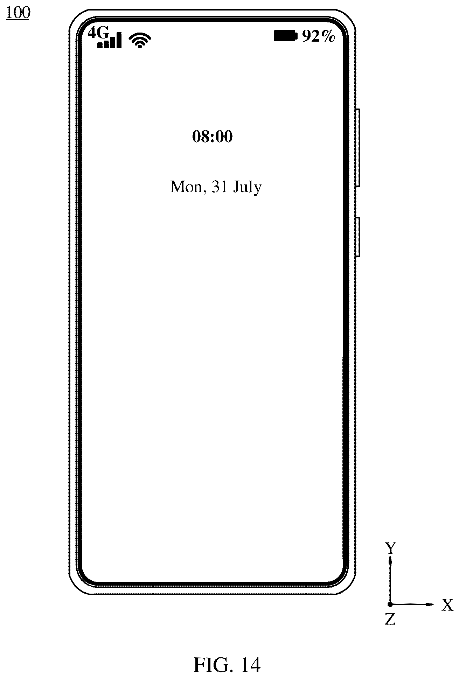

Still referring to FIG. 12, an avoidance groove 2232b is arranged on the first groove side wall 2232 of the middle frame 22, and at least a part of the bending portion 102 is located in the avoidance groove 2232b. The bending portion 102 may be entirely located in the avoidance groove 2232b, or may be partially located in the avoidance groove 2232b. The avoidance groove 2232b may be sunken from the first groove side wall 2232 to an outer side surface 211d of the frame 221, and the avoidance groove 2232b may alternatively be sunken from the groove bottom wall 2231 of the middle frame 22 to the back cover 21. In other words, the groove side wall of the avoidance groove 2232b may extend only through the first groove side wall 2232; or, a part of the groove side wall may extend through the first groove side wall 2232, and another part may extend through the groove bottom wall 2231. In this way, a width b of a black edge of an end of the display screen 10 facing the first groove side wall 2232 can be further reduced to be less than or equal to 1 mm, thereby improving a screen-to-body ratio and a display effect of the display screen 10, and further improving the use experience of the user. In addition, refer to FIG. 14. FIG. 14 is a schematic diagram of a display interface of the electronic device 100 shown in FIG. 11. The cover 11 is bonded and fixed to the middle frame 22 through four outer side surfaces, and avoids the bending portion 102 by using the avoidance groove 2232b. In this way, widths of black edges at four edges of the display screen 10 are the same, the screen-to-body ratio and a visual effect of the display screen 10 are improved, thereby improving the user experience of the user.

In the embodiment shown in FIG. 13, the first outer side surface 111 of the cover 11 is perpendicular to a display surface of the display screen 10, that is, the first outer side surface is parallel to the Z-axis direction. Correspondingly, a bonding area on which the first groove side wall 2232 is bonded to the first outer side surface 111 is also perpendicular to the display surface of the display screen 10. In this way, a design and processing of the first outer side surface 111 and the first groove side wall 2232 are facilitated, and in addition, the fourth colloid 64 is conveniently formed by dispensing glue between the first outer side surface 111 and the first groove side wall 2232.

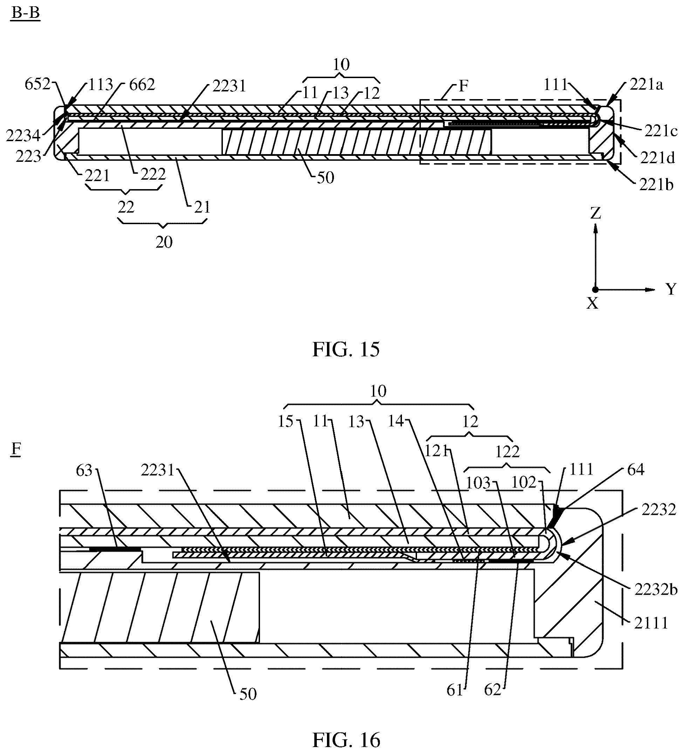

In some other embodiments, refer to FIG. 15 and FIG. 16. FIG. 15 is another cross-sectional structural diagram of the electronic device 100 shown in FIG. 3 taken along line B-B, and FIG. 16 is an enlarged view of F in FIG. 15. The first outer side surface 111 tilts, in a direction away from the display panel 12, from an end close to the display panel 12 to an end away from the display panel 12. An angle between the first outer side surface 111 and the display surface of the display screen 10 is greater than or equal to 60° and less than or equal to 80°, that is, an angle between the first outer side surface 111 and an XY plane is greater than or equal to 60° and less than or equal to 80°. Correspondingly, an angle between the bonding area on which the first groove side wall 2232 is bonded to the first outer side surface 111 and the display surface of the display screen 10 is also greater than or equal to 60°, and less than or equal to 80°. For example, an angle between the first outer side surface 111 and the display surface of the display screen 10 may be 60°, 65°, 70°, 75°, or 80°. In this way, an effective bonding area between the first outer side surface 111 of the cover 11 and the first groove side wall 2232 can be enlarged, thereby further improving bonding reliability between the cover 11 and the middle frame 22, and improving the reliability of the entire electronic device 100.

As the cover 11 has a small thickness along a direction perpendicular to the display surface of the display screen 10, the effective bonding area between the first outer side surface 111 and the first groove side wall 2232 is small. In addition, due to a special property of a material of the cover 11, shear strength between the cover 11 and the fourth colloid 64 is usually small (usually less than 1 MPa). Therefore, the first outer side surface 111 and the fourth colloid 64 can easily be detached, causing a failure of a bonding structure between the first outer side surface 111 and the first groove side wall 2232.

To resolve this problem, the bonding structure 60 further includes an ink layer (not shown in the figure), and the ink layer is arranged on the first outer side surface 111. The ink layer may cover the first outer side surface 111 through a screen printing process, to make adhesion between the ink layer and the first outer side surface 111 as large as possible. The ink layer may completely cover the first outer side surface 111, that is, an outer contour of orthographic projection of the ink layer on the first outer side surface 111 overlaps an edge of the first outer side surface 111. In other words, along the thickness direction of the display screen 10, a width of the ink layer is the same as a width of the first outer side surface 111. In some examples, the width of the first outer side surface 111 may be greater than or equal to 0.5 mm and less than or equal to 0.6 mm, and the width of the ink layer may also be greater than or equal to 0.5 mm and less than or equal to 0.6 mm. For example, the width of the ink layer may be 0.5 mm, 0.55 mm, or 0.6 mm.

Based on this, the fourth colloid 64 is bonded between the ink layer and the first groove side wall 2232. Shear strength between the ink layer and the fourth colloid 64 is greater than or equal to 10 MPa. For example, the shear strength between the ink layer and the fourth colloid 64 may be 10 MPa, 15 MPa, 20 MPa, or 25 MPa. In this way, the ink layer can have a high bonding force with the fourth colloid 64, therefore, bonding reliability between the first outer side surface 111 and the fourth colloid 64 can be improved, and further, the reliability of the entire electronic device 100 can be improved.

In some other embodiments, the ink layer may further be arranged on the second outer side surface 112, the third outer side surface 113, and the fourth outer side surface 114. The first colloidal segment 651 is bonded between the ink layer and the second groove side wall 2233, the second colloidal segment 652 is bonded between the ink layer and the third groove side wall 2234, and the third colloidal segment 653 is bonded between the ink layer and the fourth groove side wall 2235.

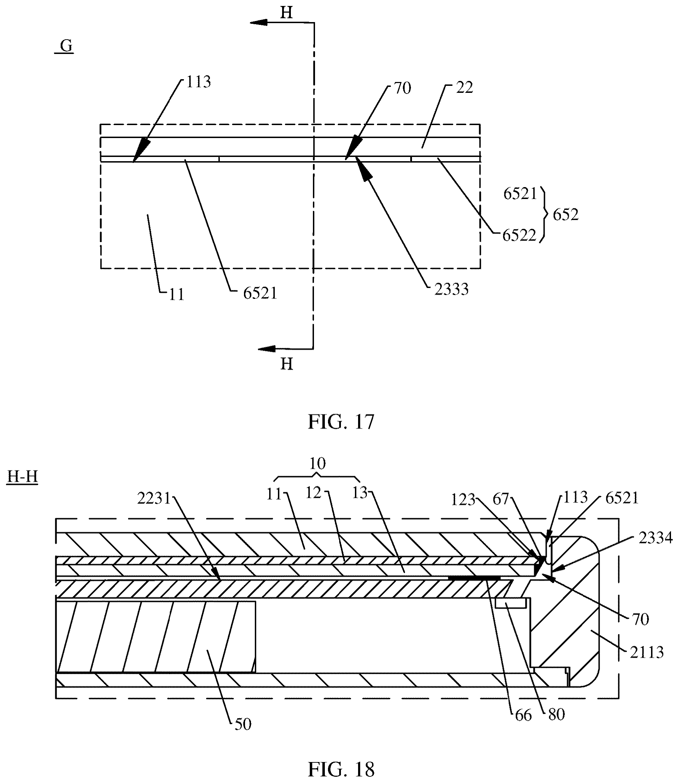

Refer to FIG. 17 and FIG. 18. FIG. 17 is an enlarged view of G in FIG. 3, and FIG. 18 is a cross-sectional structural diagram of line H-H in FIG. 17. The electronic device 100 further has a speaker 80 and a sound outlet channel 70 connected to a sound outlet of the speaker 80. The display panel 12 includes a fifth outer side surface 123, and the fifth outer side surface 123 faces the third groove side wall 2234 of the middle frame 22. The third outer side surface 113 of the cover 11 projects beyond the display panel 12, and a part of the third groove side wall 2234, a part of the third outer side surface 113, and a part of the fifth outer side surface 123 form a part of a side wall of the sound outlet channel 70. A part of the fifth outer side surface 123 and the cover 11 form an included angle area. Based on this, the seventh colloid 67 is arranged in the included angle area. The second colloidal segment 652 includes a first sub-colloidal segment 6521 and a second sub-colloidal segment 6522, and the first sub-colloidal segment 6521 and the second sub-colloidal segment 6522 are respectively located at two sides of the sound outlet channel 70. Along an extending direction of the second colloidal segment 652, two ends of the seventh colloid 67 are respectively connected to the first sub-colloidal segment 6521 and the second sub-colloidal segment 6522. In some examples, the seventh colloid 67 may be respectively connected to a part of the first sub-colloidal segment 6521 and the second sub-colloidal segment 6522, and the part overflows the third outer side surface 113. In some other examples, the seventh colloid 67 may be connected by using a silicon segment bonded between the back surface of the cover 11 and the groove side wall 2234.

In this way, a complete sealing ring is formed among the fourth colloid 64, the fifth colloid 65, and the seventh colloid 67, to prevent outside water vapor or dust from entering the inside of the electronic device 100 to damage electronic components, thereby ensuring the reliability of the entire electronic device 100.

When the first main body portion 101 of the display screen 10 further includes the backplane 13 and another film layer (for example, a polarizer layer), the seventh colloid 67 further covers surfaces of the backplane 13 and another film layer, and the surfaces face the sound outlet channel 70 and correspond to the sound outlet channel 70.

The seventh colloid 67 may be ultraviolet-curing glue. In this way, the seventh colloid 67 has good oil resistance. Exemplarily, in an environment in which a temperature is 55 °C and humidity is 95%, after the seventh colloid 67 is applied with specified grease and stored for 24 hours, both shear strength between the seventh colloid 67 and the back surface of the cover 11 and shear strength between the seventh colloid 67 and the fifth outer side surface 123 of the display panel 12 may be greater than or equal to 3 MPa. Composition of the specified grease may include oleic acid and squalene.

The foregoing uses an example in which the display panel 12 is a flexible display panel for description. In some other embodiments, the display panel 12 may alternatively be a rigid display panel, and the display panel 12 forms a part of the first main body portion 101. The second main body portion 151 of the flexible printed circuit board 15 is connected to an edge of the display panel 12. A part of the second main body portion 151 forms the bending portion 102, and another part forms the fixed portion 103. The connecting portion 152 is connected to an end of the fixed portion 103 away from the bending portion 102 and extends away from the bending portion 102.

In the descriptions of this specification, the described specific features, structures, materials, or characteristics may be combined in a proper manner in any one or more of the embodiments or examples.

Finally, it should be noted that, the foregoing embodiments are merely intended for describing the technical solutions of this application, but not for limiting this application. Although this application is described in detail with reference to the foregoing embodiments, a person of ordinary skill in the art should understand that, they may still make modifications to the technical solutions described in the foregoing embodiments, or make equivalent substitutions to some technical features thereof, and the modifications or substitutions do not make the nature of corresponding technical solutions depart from the spirit and scope of the technical solutions of embodiments of this application.

## Claims

1. An electronic device, comprising:
a middle frame, wherein the middle frame comprises an accommodating groove, and the accommodating groove comprises a groove bottom wall;
a display screen, wherein at least a part of the display screen is located in the accommodating groove; the display screen comprises a first main body portion, a bending portion, and a fixed portion, wherein the fixed portion is located on a back side of the first main body portion, and the bending portion is connected between an edge of the first main body portion and the fixed portion;
a first colloid, wherein the first colloid is bonded between the fixed portion and the first main body portion; and
a second colloid, wherein at least a part of the second colloid is bonded between the groove bottom wall and the fixed portion,
wherein an elastic modulus of the second colloid is less than or equal to 5 MPa; or
shear strength between the second colloid and the fixed portion is less than shear strength between the first colloid and the fixed portion, and is less than shear strength between the first colloid and the first main body portion; or
shear strength between the second colloid and the groove bottom wall is less than the shear strength between the first colloid and the fixed portion, and is less than the shear strength between the first colloid and the first main body portion.

2. The electronic device according to claim 1, wherein
the display screen further comprises a first chip, and the first chip is arranged on a surface that is of the fixed portion and that faces away from the first main body portion; and
at least a part of the second colloid is located on a side that is of the first chip and that faces the bending portion.

3. The electronic device according to claim 2, wherein
a width of the second colloid is greater than or equal to 0.5 mm, and less than or equal to 2.5 mm.

4. The electronic device according to any one of claims 1 to 3, wherein
the second colloid is silicon gel or ultraviolet-curing glue.

5. The electronic device according to any one of claims 1 to 4, wherein the display screen comprises:
a display panel, comprising a first part and a second part, wherein the first part forms a part of the first main body portion, and the second part forms the bending portion and the fixed portion; and
a flexible printed circuit board, comprising a second main body portion and a connecting portion, wherein the second main body portion is connected to an end that is of the fixed portion and that is away from the bending portion, and the connecting portion is connected to an end that is of the second main body portion and that is away from the bending portion, and extends away from the bending portion.

6. The electronic device according to any one of claims 1 to 4, wherein the display screen comprises:
a display panel, wherein the display panel forms a part of the first main body portion; and
a flexible printed circuit board, comprising a second main body portion and a connecting portion, wherein the second main body portion is connected to an edge of the display panel, the second main body portion forms the bending portion and the fixed portion, and the connecting portion is connected to an end that is of the fixed portion and that is away from the bending portion, and extends away from the bending portion.

7. The electronic device according to claim 5 or 6, wherein
the electronic device further comprises a third colloid, wherein the third colloid is bonded between the first main body portion and the groove bottom wall and is located on a side that is of the second main body portion and that is away from the bending portion, and a distance between the third colloid and the second main body portion is less than or equal to 10 mm.

8. The electronic device according to claim 7, wherein
a width of the third colloid is greater than or equal to 0.5 mm, and less than or equal to 2.5 mm.

9. The electronic device according to any one of claims 1 to 8, wherein
the display screen comprises a display panel and a cover, wherein the cover is arranged in a stacked manner on a display side of the display panel, and the cover and at least a part of the display panel form a part of the first main body portion; and the cover comprises a first outer side surface, and the first outer side surface is arranged opposite to the bending portion along a thickness direction of the display screen;
the accommodating groove comprises a first groove side wall, wherein the first groove side wall is connected to the groove bottom wall and faces the bending portion and the first outer side surface; and
the electronic device further comprises a fourth colloid, wherein the fourth colloid is bonded between the first outer side surface and the first groove side wall.

10. The electronic device according to claim 9, further comprising:
an ink layer, wherein the ink layer is arranged on the first outer side surface, and the fourth colloid is bonded between the ink layer and the first groove side wall.

11. The electronic device according to claim 10, wherein
shear strength between the ink layer and the fourth colloid is greater than or equal to 10 MPa.

12. The electronic device according to any one of claims 9 to 11, wherein
the first outer side surface is perpendicular to a display surface of the display screen; or
the first outer side surface tilts, in a direction away from the display panel, from an end close to the display panel to an end away from the display panel, and an angle between the first outer side surface and the display surface of the display screen is greater than or equal to 60° and less than or equal to 80°.

13. The electronic device according to any one of claims 9 to 12, wherein
an avoidance groove is arranged on the first groove side wall, and at least a part of the bending portion is located in the avoidance groove.

14. The electronic device according to any one of claims 9 to 13, wherein
along a thickness direction of the display screen, a width of the fourth colloid is greater than or equal to 0.6 mm and less than or equal to 1 mm.

15. The electronic device according to any one of claims 9 to 14, wherein
the cover further comprises a second outer side surface, a third outer side surface, and a fourth outer side surface, wherein the first outer side surface, the second outer side surface, the third outer side surface, and the fourth outer side surface are connected head-to-tail in sequence; the accommodating groove further comprises a second groove side wall, a third groove side wall, and a fourth groove side wall that are connected to the groove bottom wall, wherein the first groove side wall, the second groove side wall, the third groove side wall, and the fourth groove side wall are connected head-to-tail in sequence; and
the electronic device further comprises a fifth colloid, comprising a first colloidal segment, a second colloidal segment, and a third colloidal segment that are connected in sequence, wherein the first colloidal segment is bonded between the second outer side surface and the second groove side wall, the second colloidal segment is bonded between the third outer side surface and the third groove side wall, and the third colloidal segment is bonded between the fourth outer side surface and the fourth groove side wall; and two ends of the fourth colloid are respectively connected to the first colloidal segment and the third colloidal segment.

16. The electronic device according to claim 15, wherein
a part of the fifth colloid is located on a back side of the cover and is arranged at an interval from the display panel.

17. The electronic device according to claim 15 or 16, wherein
the electronic device further comprises a sixth colloid, wherein the sixth colloid is bonded between the first main body portion and the groove bottom wall, and comprises a fourth colloidal segment, a fifth colloidal segment, and a sixth colloidal segment that are connected in sequence; an extending direction of the fourth colloidal segment is the same as an extending direction of the first colloidal segment, an extending direction of the fifth colloidal segment is the same as an extending direction of the second colloidal segment, and an extending direction of the sixth colloidal segment is the same as an extending direction of the third colloidal segment; and two ends of the second colloid are respectively connected to the fourth colloidal segment and the sixth colloidal segment.

18. The electronic device according to claim 15, wherein
the electronic device has a sound outlet channel; the second colloidal segment comprises a first sub-colloidal segment and a second sub-colloidal segment, wherein the first sub-colloidal segment and the second sub-colloidal segment are respectively located on two sides of the sound outlet channel;
the display panel comprises a fifth outer side surface, wherein the fifth outer side surface faces the third groove side wall; the third outer side surface projects out of the display panel, and a part of the third groove side wall, a part of the third outer side surface, and a part of the fifth outer side surface form a part of a side wall of the sound outlet channel; and the part of the fifth outer side surface and the cover form an included angle area; and
the electronic device further comprises a seventh colloid, wherein the seventh colloid is arranged in the included angle area; and along the extending direction of the second colloidal segment, two ends of the seventh colloidal segment are respectively connected to the first sub-colloidal segment and the second sub-colloidal segment.
